# EUROPÄISCHE PATENTSCHRIFT

(11) **EP 2 174 823 B1**
(45) Veröffentlichungstag und Bekanntmachung des Hinweises auf die Patenterteilung: **01.02.2012**
(21) Anmeldenummer: 09012756.4
(22) Anmeldetag: 08.10.2009
(51) Int. Cl.: B60K 17/26, F16D 41/18, B62D 51/04, B62D 51/06, A01B 33/02, B60K 17/16

(54) **Maschine zur Garten- und Landschaftspflege**
Garden and landscaping machine
Machine d'entretien de jardins et de paysages

(30) Priorität: 10.10.2008 DE 102008050915
(43) Veröffentlichungstag der Anmeldung: 14.04.2010
(73) Patentinhaber: Julius Tielbürger GmbH & Co. KG, D-32351 Stemwede-Oppenwehe (DE)
(72) Erfinder: Tielbürger, Jörg, D-32351 Stemwede-Obbenwehe (DE)
(74) Vertreter: Pott, Ulrich

(56) Entgegenhaltungen:
- FR-A1- 2 889 276
- GB-A- 821 823

## Beschreibung

Die Erfindung betrifft eine Maschine zur Garten- und Landschaftspflege, insbesondere in Form einer Kehrmaschine, eines Rasenmähers, eines Schneeräumers, eines Vertikutierers o. dgl. Aggregate, gemäß dem Oberbegriff des Anspruchs 1.

Maschinen zur Garten- und Landschaftspflege sind in einer Vielzahl von Ausführungsformen bekannt, wobei diese ein jeweiliges Arbeitsgerät aufweisen, das im Bereich eines Fahrgestells gehalten ist (DE 93 17 659; DE 43 39 623 C2; DE 93 02 750; US 5,426,805). Dabei weist das den Antriebsmotor aufnehmende Fahrgestell zumindest zwei Antriebsräder an einer entsprechenden Querachse auf, so dass die Maschine sowohl in Geradeausfahrt als auch beim Durchlaufen einer Wendebahn o. dgl. Richtungsänderungen entsprechend gesteuert werden kann. Im Bereich der beiden angetriebenen Räder ist dabei eine Mitnahmeverbindung zur Querachse dadurch gebildet, dass in einer Durchgangsbohrung ein Schraubbolzen fixiert ist, der an einem auf der Felge des Antriebsrades befindlichen Anschlag anlegbar ist und so die Mitnahme gewährleistet wird. Mit dieser einfachen Anlageverbindung wird erreicht, dass bei einer Richtungsänderung der Maschine das jeweils bogenseitig außen liegende Antriebsrad auf einem entsprechend weiten Bogen antriebslos gedreht werden kann. Diese Radhalterungen mit nach Art eines Steckkeiles mit Mitnehmer aufgebauten Konstruktionen sind jedoch für 180°-Wendungen der Maschine wenig praktikabel und bei hohen Antriebs- und Schwenkkräften ist die Verbindungszone bruchgefährdet. Bei einem elektrisch antreibbaren Rasenmäher gemäß US 2003/0070407 A1 wird eine vergleichsweise geringe Antriebsleistung auf eine die Räder aufweisende Querachse übersetzt, wobei im Bereich endseitiger Radnaben ein jeweiliges Schaltrad auf der Querachse gehalten ist. Ein stirnseitiges Rastprofil des Schaltrades wirkt dabei mit einem parallel zur Querachse ausgerichteten Axialstift zusammen. Diese offene Bauweise nach Art eines Klinkenrades ist bei hohe Verschmutzungs- und Reibbelastungen aufweisenden Rasenmähern wenig praktikabel, überaus störanfällig und für höhere Antriebsleistungen ist diese Konstruktion nicht geeignet. In GB 821823 A wird ein Fahrgestell vorgeschlagen, dessen Räder mittels einer radial zur Querachse verlagerbare Mitnehmer aufweisenden Drehsperre gesteuert werden. Dies ist auch in der gattungsbildende FR 2889276 gezeigt, wobei jedoch ein offen liegendes Zahnrad mit einer Innenverzahnung des Rades in offener Bauweise zusammenwirkt. Der Mitnehmer dieser Drehsperre ist hohem Verschleiß durch ein als Schneidkante wirkendes Stirnprofil ausgesetzt, wobei die offene Bauweise und ein den Mitnehmer führendes Sackloch jeweils Verklemmungen der Bauteile bewirken und damit auch dieses System für eine Maschine zur Landschaftspflege wenig geeignet ist.

Die Erfindung befasst sich mit dem Problem, eine zur Garten- und Landschaftspflege vorgesehene Maschine zu schaffen, deren Radabstützung mit geringem technischem Aufwand eine Verbesserung des Geradeaus- und Kurvenlaufs ermöglicht, wobei diese gegen Verschmutzungen geschützte Stützverbindung auch bei hohen Antriebsleistungen langzeitstabil ist und bedienfreundlich wirksam bleibt.

Die Erfindung löst diese Aufgabe durch eine Maschine mit den Merkmalen des Anspruchs 1. Weitere vorteilhafte Ausgestaltungen ergeben sich aus den Ansprüchen 2 bis 16.

Die zur Garten- und Landschaftspflege vorgesehene Maschine ist in erfindungsgemäßer Ausführung mit im Bereich der Querachse aufgenommenen Antriebsrädem versehen, deren Stützverbindung eine in das System integrierte, weitgehend geräuschlose und verschleißfrei einsetzbare Drehsperre aufweist. Das Konzept dieser Stützverbindung sieht vor, dass bei einer Änderung der Fahrtrichtung ausgehend von einer Geradeausfahrt der Maschine die Teile der Drehsperre entsprechend der jeweiligen Lage des Antriebsrades in Bezug auf die bogenförmige Richtungsänderung für eine weitere Übertragung des Antriebsmomentes gesperrt sind oder ein antriebsloses Mitdrehen des jeweils anderen Antriebsrades möglich ist.

Dabei ist die Drehsperre so aufgebaut, dass deren Wirkverbindungen an unterschiedlichen Achslängen der jeweiligen Querachse so aufgebaut werden können, dass bei einer bogenförmigen Änderung der Fahrtrichtung das außen liegende, mitlaufende Antriebsrad auch vergleichsweise große Bogenkonturen durchlaufen kann und damit eine für unterschiedliche Maschinenkonzepte optimale Wendehilfe definiert werden kann.

Die als ein weitgehend geschlossenes System aufgebaute Drehsperre ist mit einem Mitnahmebolzen-Mitnahmeprofilteil-System versehen, wobei eine permanente Anlageverbindung des Bolzens am Profil gewährleistet ist und diese mechanischen Komponenten im System von einer Schmiermittelfüllung so umgeben sind, dass Verschleißerscheinungen zuverlässig vermieden sind. Durch eine entsprechende Anpassung des Mitnahmeprofilteils an den durch den Abstand der Antriebsräder in Richtung der Querachse verursachten Wendebogen bei einer Kurvenfahrt wird gewährleistet, dass der radial bewegliche Mitnahmebolzen eine optimale Schubfrequenz bei seiner radialen Hin- und Herbewegung aufweist.

Die Drehsperre ist im Bereich der Bolzen-Profil-Einheit so konzipiert, dass neben geringen Reibkräften nur vernachlässigbar geringe Scherkräfte auftreten und damit das System insgesamt bruchsicher ist. Gleichzeitig ist die als Wendehilfe wirksame Drehsperre so kompakt aufgebaut, dass ein großes Antriebsmoment übertragen werden kann.

Das Konzept der Drehsperre sieht vor, dass der Mitnahmebolzen wahlweise ausgehend von der Querachse radial verschieblich aufgenommen ist oder die radial verschiebliche Festlegung des Mitnahmebolzens im Bereich der Radnabe vorgesehen sein kann. Damit ist entsprechend der Bauteilgröße bzw. des jeweils zu übertragenden Antriebsmomentes eine weitere Optimiermöglichkeit eröffnet.

Die im Bereich des Mitnahmeprofilteils bewirkte Anlagestellung des Mitnahmebolzens wird dabei durch die Anordnung mehrerer Anschläge an unterschiedliche Wenderadien angepasst, wobei sich die Maschine insgesamt auch um mehr als 180° verschwenken lässt und dabei die Wendehilfe weiterhin wirksam bleibt. In vorteilhafter Ausführung sind drei um 120° versetzte Anschläge vorgesehen, wobei Tests des Systems ergaben, dass die Maschine insgesamt eine Verbesserung des Geradeauslaufs aufweist und auch bei einer handbetätigten Maschine ein Gegenlenken nicht mehr erforderlich ist.

Die weitgehend geschlossene Ausführung der Drehsperre mit Schmiermittelfüllung ist wenig verschleißanfällig, wobei der Mitnahmebolzen im Inneren des Systems in einfachster Ausführung eine Druckfeder als das Stellelement aufweist. Sämtliche Teile der kompakten Drehsperre sind in dem geschlossenen System vom Schmiermittel weitgehend umspült, so dass damit eine langzeitige Stabilität dieser Wendehilfe auch unter rauen Einsatzbedingungen gewährleistet wird.

Weitere Einzelheiten und vorteilhafte Ausgestaltungen der Erfindung ergeben sich aus der nachfolgenden Beschreibung und den Zeichnungen, die mehrere Ausführungsbeispiele der erfindungsgemäßen Maschine mit Drehsperre zeigen. In der Zeichnung zeigen:
- Fig. 1: eine Prinzipdarstellung einer Maschine zur Garten- und Land- schaftspflege, die insbesondere von Hand in entsprechender Fahrtrichtung steuerbar ist,
- Fig. 2: eine Draufsicht ähnlich Fig. 1 mit der Maschine in einer um 45° geschwenkten Bedienstellung,
- Fig. 3: eine Draufsicht ähnlich Fig. 1 mit der eine 180°-Wendeposition einnehmenden Maschine,
- Fig. 4: eine vergrößerte Einzeldarstellung einer zwei Antriebsräder auf- weisenden Querachse der Maschine mit einer Drehsperre,
- Fig. 5: eine vergrößerte Explosivdarstellung im Bereich eines der An- triebsräder mit den Bauteilen der Drehsperre,
- Fig. 6: eine vergrößerte Einzeldarstellung der Drehsperre mit an einem Mitnahmeprofilteil anliegendem Mitnahmebolzen,
- Fig. 7: eine Schnittdarstellung ähnlich Fig. 6, wobei der Mitnahmebolzen der Drehsperre eine um 180° geänderte Einbaulage aufweist,
- Fig. 8: eine Schnittdarstellung gemäß einer Linie I-I durch eines der An- triebsräder mit einer gekapselten Ausführung der Drehsperre,
- Fig. 9 bis Fig. 13: jeweilige Einzeldarstellungen von Mitnahmeprofilteilen mit unter- schiedlichem Innen- und Außendurchmesser,
- Fig. 14 bis Fig. 18: jeweilige Einzeldarstellungen ähnlich Fig. 9 bis 13 mit gleichen Innen- und Außendurchmessern,
- Fig. 19 bis Fig. 23: jeweilige Darstellungen ähnlich Fig. 9 bis Fig. 13 mit in Anlage- stellung befindlichem Mitnahmebolzen der Drehsperre,
- Fig. 24: eine Darstellung ähnlich Fig. 6 mit die Reibkräfte im System ver- deutlichenden Wirkpfeilen, und
- Fig. 25: eine Darstellung ähnlich Fig. 7 mit einem Schmiernippel im Be- reich der Drehsperre.

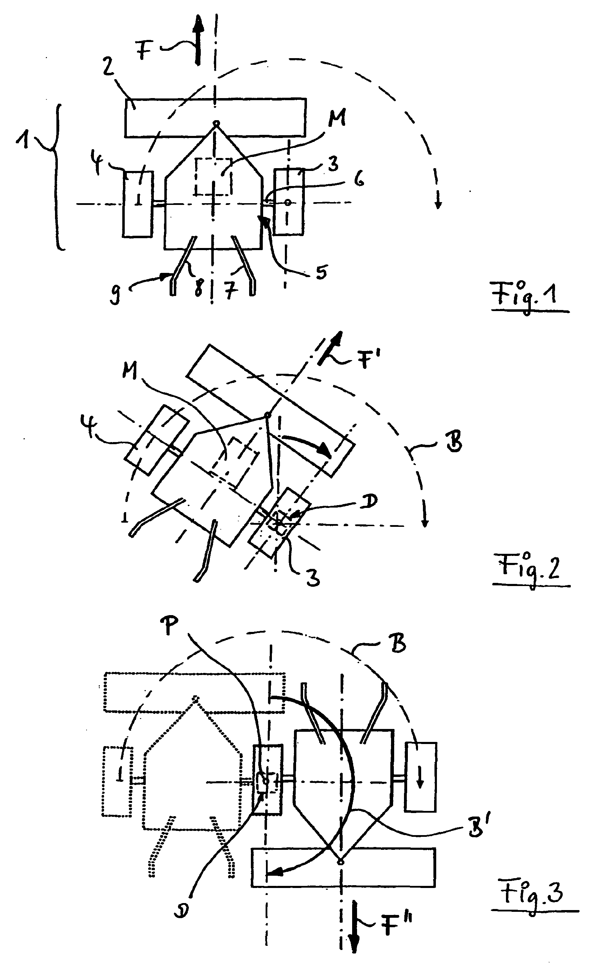

In Fig. 1 ist eine insgesamt mit 1 bezeichnete Maschine zur Garten- und Landschaftspflege dargestellt, wobei diese ein frontseitiges Aggregat 2 aufweist, das eine Spezifizierung der Maschine als Kehrmaschine, Rasenmäher, Schneeräumer o. dgl. bewirkt. Die Maschine 1 ist dabei mit einem zumindest zwei Antriebsräder 3, 4 aufweisenden Fahrgestell 5 versehen, wobei die beiden Antriebsräder 3, 4 an einer Querachse 6 aufgenommen sind und das System eine in dieser Ausführung von Handhebeln 7, 8 gebildete Lenkeinheit 9 aufweist. Damit kann die an sich bekannte Maschine 1 sowohl in Geradeausfahrt (Pfeil F, Fig. 1) als auch beim Durchlaufen einer Wendebahn B o. dgl. Änderungen der Fahrtrichtung (Fig. 2, Fig. 3) geführt werden.

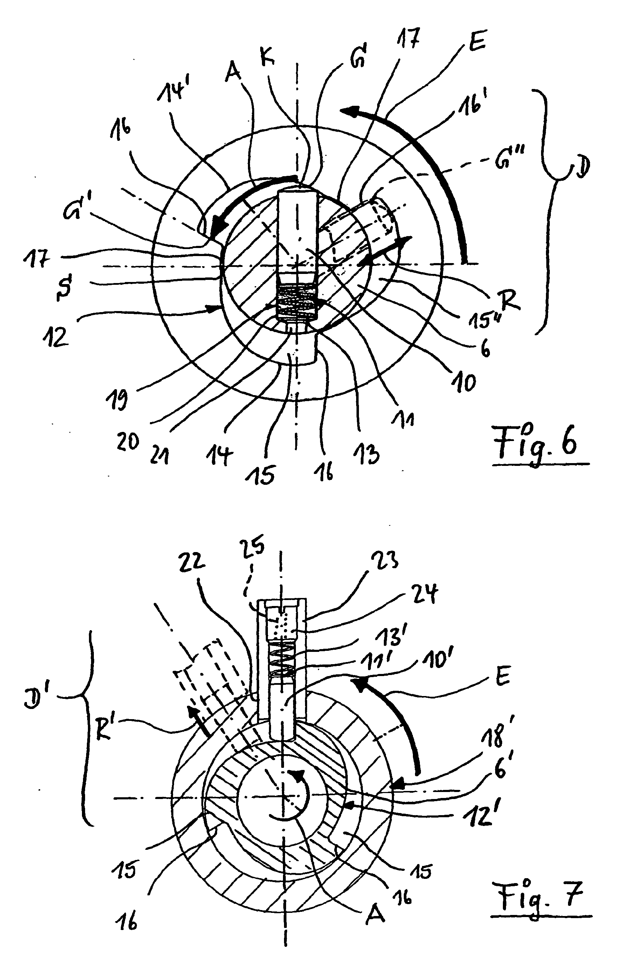

Die Maschine 1 ist in erfindungsgemäßer Ausführung mit einem von einem Antrieb M ausgehenden Fahrantrieb versehen, bei dem die Antriebsräder 3, 4 jeweils zum diese aufnehmenden Bereich der Querachse 6 hin eine bei Änderung der Fahrtrichtung (F', Fig. 2; F", Fig. 3) zumindest phasenweise als Drehsperre (D, D'; Fig. 6, Fig. 7) wirksame Stützverbindung aufweisen.

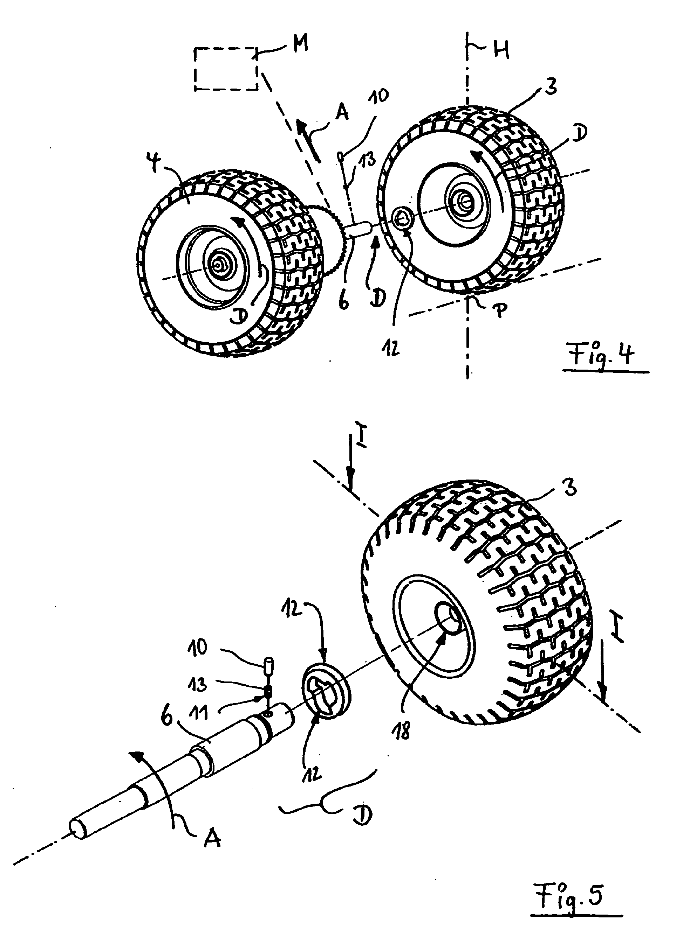

Das Zusammenwirken der Drehsperre D mit den einen an sich bekannten Antriebsmotor M aufweisenden Bewegungsbaugruppen gemäß Fig. 2 und Fig. 4 verdeutlicht, dass mit der in den Phasen-Darstellungen insbesondere am Rad 3 wirkenden Drehsperre D eine jeweilige Wendehilfe definiert wird. Gleichzeitig ist bei dieser bogenförmigen Änderung der Fahrtrichtung F' eines der Antriebsräder - nämlich 4 - vom Antriebsmoment (Pfeil A, Fig. 4) lösbar.

Es versteht sich, dass bei variablen Änderungen der Fahrtrichtung F, F' das in Bezug auf den Wendebogen B jeweils radial innen liegende Antriebsrad (Fig. 2, Fig. 3/jeweils Rad 3) in seiner Antriebslage im Bereich der Drehsperre D verbleibt, das jeweils außen liegende Antriebsrad 4 entsperrt wird und dieses auf dem äußeren Wendebogen B mitführbar ist. In der Prinzipdarstellung gemäß Fig. 3 wird deutlich, dass bei einer 180°-Wendung B das innen liegende Antriebsrad 3 auf einem Bogen B' im wesentlichen auch in einem Auflagepunkt P um die vertikale Hochachse H schwenkbar sein kann.

Die eine vorteilhafte Wendehilfe bildende erfindungsgemäße Drehsperre D ist in Fig. 4 bis Fig. 6 in einer ersten Ausführung detaillierter dargestellt, wobei deutlich wird, dass die Drehsperre D jeweils einen Mitnahmebolzen 10 aufweist, der im Bereich der Stützverbindung durch ein Stellelement 11 in radialer Richtung (Fig. 6, Pfeil R) verlagerbar und dabei im Bereich der Drehsperre D eine Anlagestellung einnimmt. Diese Anlagestellung(en) G, G', G" (Fig. 6) wird/werden im Bereich der Drehsperre D von einem Mitnahmeprofilteil 12 definiert, wobei dem mit dem Stellelement 11 zusammenwirkenden Mitnahmebolzen 10 variable Anlage- und/oder Mitnahmestellungen G, G", G' (Strichdarstellung des Mitnahmebolzens) vermittelbar sind.

Die Detaildarstellungen gemäß Fig. 6 und Fig. 7 verdeutlichen, dass als das radial wirksame Stellelement 11 jeweils eine den Mitnahmebolzen 10, 10' hintergreifende Druckfeder 13, 13' vorgesehen ist. Durch diese Ausführung des Stellelementes 11 ist gewährleistet, dass der Mitnahmebolzen 10, 10' in jeder Antriebs- bzw. Schwenkphase der Maschine 1 permanent am Mitnahmeprofilteil 12 anliegt.

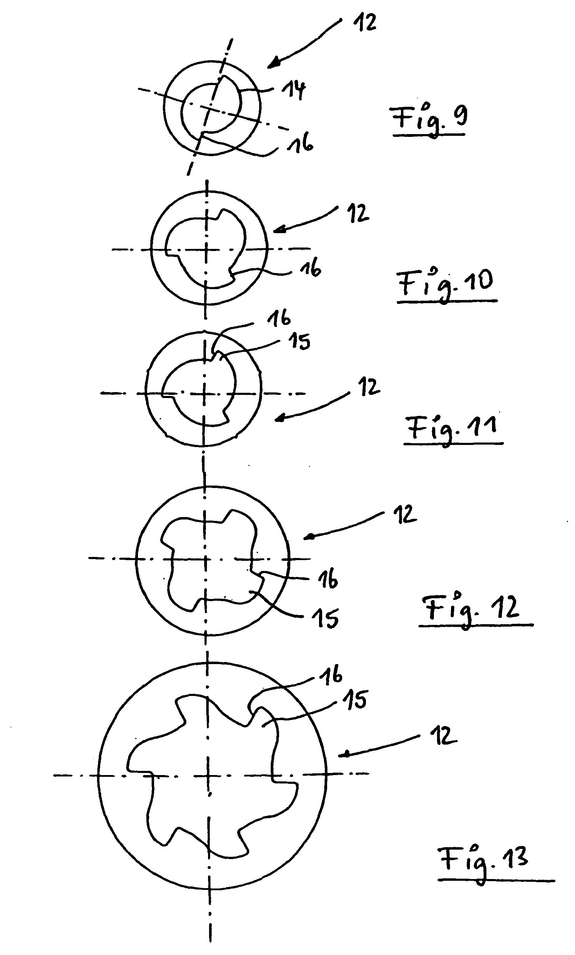

Die vergrößerten Darstellungen gemäß Fig. 6 und Fig. 7 verdeutlichen auch, dass das Mitnahmeprofilteil 12, 12' jeweilige mit bogenförmiger Kontur verlaufende Anlagebögen 14, 14' definiert, wobei diese als kreisbogen-, spiralbogen- oder evolventenbogenförmige Ausführungen mit unterschiedlichen Radien (Fig. 9 bis Fig. 18) denkbar sind. Mit diesen Anlagebögen 14, 14' werden entsprechende Freiräume in Form von Aufnahmetaschen 15 definiert, wobei an deren jeweiligen Enden sich radial erstreckende Anlagekanten 16 geformt sind. In Fig. 6 (Strichdarstellung) und Fig. 7 ist die Wirkung der Anlagekanten 16 ersichtlich, mit denen ein insbesondere radial wirksamer Formschluss des Mitnahmebolzens 10, 10' am Mitnahmeprofilteil 12, 12' erreicht wird.

In den Darstellungen gemäß Fig. 9 bis 13, 14 bis 18 bzw. 19 bis 23 sind unterschiedliche Ausführungen der Anlagebögen 16 im Bereich von Mitnahmeprofilteilen 12 dargestellt, wobei ausgehend von zumindest zwei eine jeweilige Anlagekante 16 definierenden Anlagebögen (Fig. 9, Fig. 14 bzw. Fig. 19) jeweilige Ausführungen mit drei um 120° versetzt angeordneten Anlagekanten 16 (Fig. 10 und 11, Fig. 15 und 16, Fig. 20 und 21) sowie Ausführungen mit mehr als drei Anlagekanten (Fig. 12 und 13, Fig. 17 und 18, Fig. 22 und 23) ersichtlich sind. Ebenso ist denkbar, dass das Mitnahmeprofil 12 mit nur einer der Anlagekanten 16 bzw. nur einer Aufnahmetasche 15 versehen ist (nicht dargestellt).

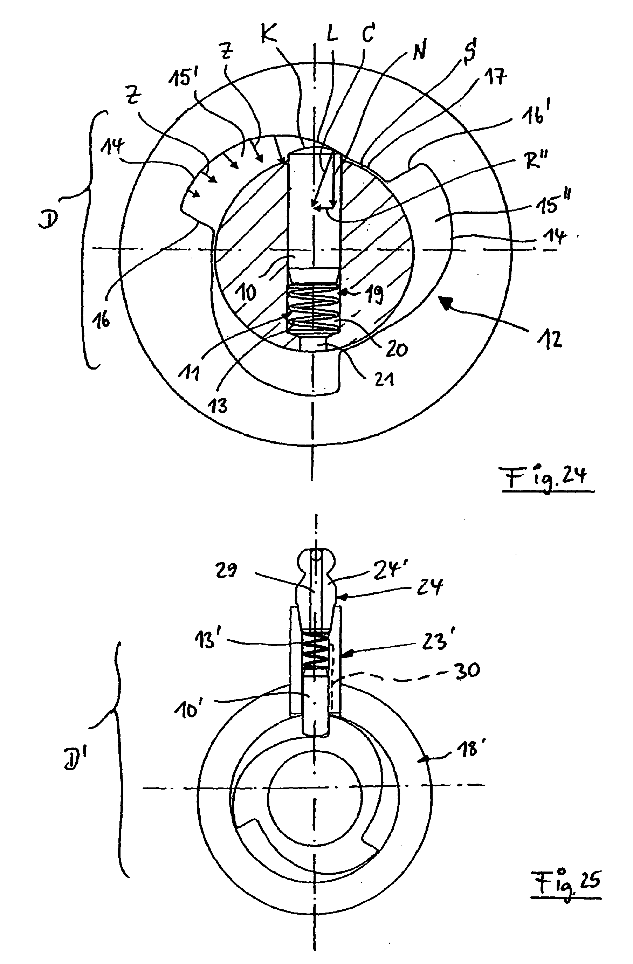

In den vergrößerten Darstellungen gemäß Fig. 6 und Fig. 24 wird das mit drei Anlagekanten 16 versehene Aufnahmeprofil 12 deutlich, wobei der Mitnahmebolzen 10 entlang des Mitnahmeprofilteils 12 zwischen der Anlagekante 16 und der Aufnahmetasche 15 an kreisbogenförmigen Teilabschnitten 17 entlang führbar ist. Mit Blick auf die Gleitverhältnisse im Verbindungsbereich dieser Teile wird deutlich, dass zumindest im Bereich des kreisbogenförmigen Teilabschnitts 17 ein verengter Schmierspalt S definiert ist.

Das vorbeschriebene System der Drehsperre D bzw. D' (Fig. 7, Fig. 25) ist in unterschiedlichen Ausführungsvarianten denkbar, wobei in der Ausführung gemäß Fig. 6 bzw. Fig. 24 das Mitnahmeprofilteil 12 der Drehsperre D mit einer Radnabe 18 des jeweiligen Antriebsrades 3, 4 (Fig. 5) verbunden ist. Damit wird eine Konstruktion gebildet, bei der der mit dem Mitnahmeprofilteil 12 zusammenwirkende Mitnahmebolzen 10 in einer in der Querachse 6 vorgesehenen Aufnahmeöffnung 19 gleitbeweglich (Pfeil R) gehalten ist und gleichzeitig mittels der innen liegenden Druckfeder 13 eine radiale Zwangsführung gebildet ist. Dabei ist vorgesehen, dass als Aufnahmeöffnung 19 eine die Querachse 6 durchgreifende Bohrung 20 vorgesehen ist, die bodenseitig dem Mitnahmebolzen 10 gegenüberliegend eine Auslassöffnung 21 aufweist, derart, dass ein im System befindliches Schmiermittel und bewegtes Luftvolumen (nicht dargestellt) aus der Bohrung 20 ausleitbar ist. Damit wird eine Auffederung durch ein Luftpolster vermieden und das Schmiermittel am Mitnahmebolzen 10 kann automatisch ausgetauscht werden.

In der gemäß Fig. 7 bzw. Fig. 25 dargestellten Ausführungsform der Drehsperre D' ist vorgesehen, dass der Mitnahmebolzen 10' der Drehsperre D' einen im Querschnitt ringförmigen Nabenteil 18' des Antriebsrades 3, 4 im Bereich einer Durchgangsbohrung 22 durchgreift und dabei in den Bereich der angetriebenen Querachse 6' so übersteht, dass mit dem Mitnahmeprofilteil 12' die bereits in Fig. 6 erörterte Mitnahme- und Anlageverbindung gebildet ist.

Dabei wird deutlich, dass der das Nabenteil 18' durchgreifende Mitnahmebolzen 10' rückseitig mit der Druckfeder 13' zusammenwirkt und andererseits an das innerhalb des Nabenteils 18' drehbare Mitnahmeprofilteil 12 der Mitnahmebolzen so anlegbar ist, dass für die angetriebene Querachse 6 die dargestellte Antriebssituation geschaffen ist.

Bei dieser Konstruktion ist die Druckfeder 13' in einem über das Nabenteil 18' vorstehenden Hülsenteil 23 geführt und in diesem ist ein die Stellfeder 13' hintergreifendes Element in Form einer Stellschraube o. dgl. Gegenhalter 24 vorgesehen. Ebenso ist denkbar, dass in diesem Bereich eine Schmieröffnung 25 integriert wird. Bei dieser Ausführung der Drehsperre D' ist vorgesehen, dass das Nabenteil 18' im Querschnitt ringförmig ausgebildet ist, wobei auch entsprechend abweichende Querschnittsprofile denkbar sind (nicht dargestellt). In Fig. 25 ist die Drehsperre D' mit einem als Schmiernippel 24' ausgebildeten Gegenhalter 24 versehen, wobei über eine Zuführöffnung 29 und einen Kanal 30 im Mitnahmebolzen 10 bzw. in der Hülse 23' das Schmiermittel in die Aufnahmetasche 15 bzw. die Schmierspalte zwischen den Bauteilen gelangt.

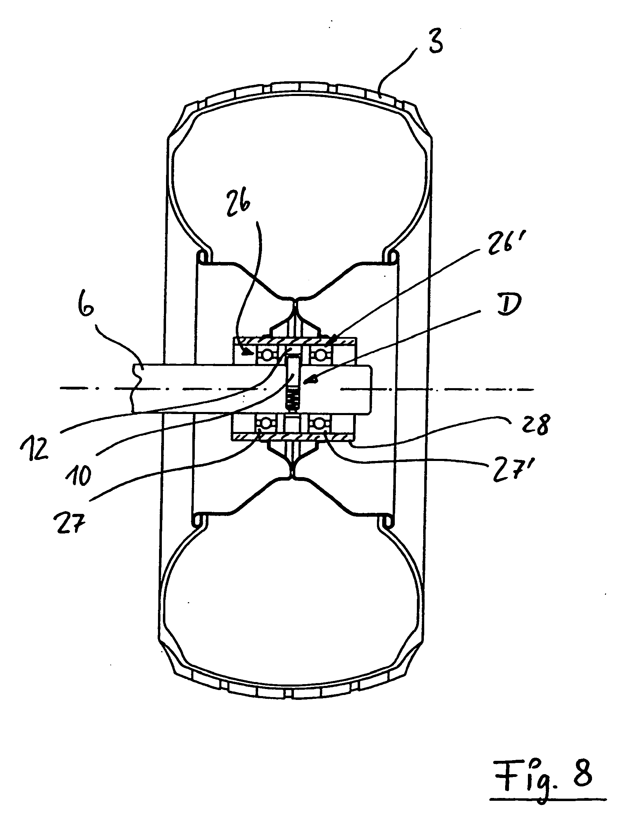

In Fig. 8 ist in einer Schnittdarstellung das Konzept der Drehsperre D ähnlich Fig. 6 verdeutlicht, wobei deutlich wird, dass die Drehsperre D als eine in Richtung der Querachse 6 mit seitlichen Abdeckteilen 26, 26' weitgehend fluiddicht verschließbare Baugruppe ausgebildet ist. Damit wird in der Baugruppe ein Bereich definiert, in dem das die reibbelasteten Zonen der Drehsperre D - insbesondere in Anlagebereichen von Mitnahmebolzen 10 und Profilteil 12 - erfassende Schmiermittel dauerhaft gehalten wird. Denkbar ist dabei, dass die Baugruppe im Bereich der seitlichen Abdeckteile 26, 26' jeweilige Dichtungen und einen entsprechenden Schmiermitteleinlass (ähnlich Fig. 7, Einlass 25; Fig. 25, Einlass 29) aufweist. In der Ausführung gemäß Fig. 8 sind als seitliche Abdeckteile 26, 26' unmittelbar an das Mitnahmeprofilteil 12 angrenzende und in einer Aufnahmehülse 28 gehaltene Radialkugellager 27, 27' vorgesehen.

In Fig. 6 und Fig. 7 sowie 24 (Wirkpfeile Z in Aufnahmetasche 15') sind durch entsprechende Bewegungspfeile A, E (Fig. 6, 7) und R bzw. R' die unterschiedlichen Wirkphasen der Systeme bei den in Fig. 2 und Fig. 3 dargestellten Wendebewegungen der Maschine 1 dargestellt.

In Fig. 6 wird - bei normaler Vorwärtsbewegung in Fahrtrichtung F (Fig. 1) - der Mitnahmebolzen 10 im Bereich der Anlagekante 16 in die Anlageposition G' verlagert und damit das zugeordnete Antriebsrad in Drehrichtung D (Fig. 4) bewegt. Bei Erreichen der in Fig. 2 dargestellten Position zur Fahrtrichtungsänderung gemäß F' wird das in dieser Bewegungsphase außen liegende Rad 4 auf dem Wendebogen B verlagert, so dass eine dem Pfeil E entsprechende Beschleunigung am Rad 4 bzw. im Bereich der Drehsperre D wirksam wird. Dieser Geschwindigkeitsunterschied zwischen Querachse 6 und Radnabe 18 (Fig. 5) führt dazu, dass das Mitnahmeprofilteil 12 mit seinem Anlagebogen 14' über die Stirnseite K des Mitnahmebolzens 10 hinweg gleitet.

Die dabei wirksamen Reibkräfte Z sind in Fig. 24 dargestellt, wobei entsprechend der vorbeschriebenen Gleitbewegung nachfolgend im Bereich der Aufnahmekante 16' eine Bewegung gemäß Pfeil R für den Mitnahmebolzen 10 möglich wird und dieser dann von der zugeordneten Aufnahmetasche 15" (Strichdarstellung in Fig. 6) erfasst wird.

Diese Wirkung nach Art einer "Sprung-Funktion" im Bereich der entsperrten Anlageteile der Drehsperre D kann sich beim Durchfahren des Wendebogens B mehrmals wiederholen, so dass durch die vorbeschriebenen optimierten Profilierungen im Bereich des Mitnahmebolzens 10 und des Mitnahmeprofilteils 12 auch häufige Lastwechsel weitgehend verschleißfrei ausführbar sind. Beim Erreichen der neuen Fahrposition (z. B. Fig. 3) wird auch das bis jetzt in entriegelter "Sprung-Lage" befindliche System der Drehsperre D wieder gesperrt (Anlage des Mitnahmebolzens bei G') und die normale Fahrbewegung F" mit dem Antrieb A an beiden Antriebsrädern 3, 4 kann fortgesetzt werden.

Der vorbeschriebene Wirkvorgang im Bereich der Drehsperre D erfolgt mit entsprechend variierten Bewegungsbedingungen ebenfalls bei der zweiten Ausführung der Drehsperre D' gemäß Fig. 7.

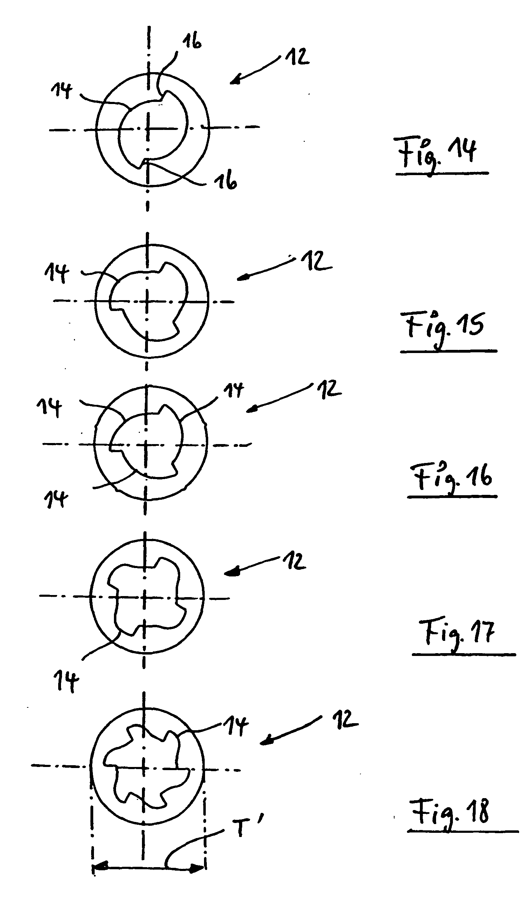

In Fig. 9 bis 13 bzw. 19 bis 23 sind die unterschiedlichen Ausführungen der Mitnahmeprofilteile 12 für unterschiedliche Durchmesser T des Systems im Mitnahmebereich der Drehsperre D dargestellt. In Fig. 14 bis 18 ist eine ähnliche Gestaltung der Drehsperre D für konstante Durchmesser T' veranschaulicht, so dass daraus eine optimale Anpassung der Bauteile an variierende Maschinen 1 bzw. Größenverhältnisse im Bereich der Querachse 6 ableitbar sind.

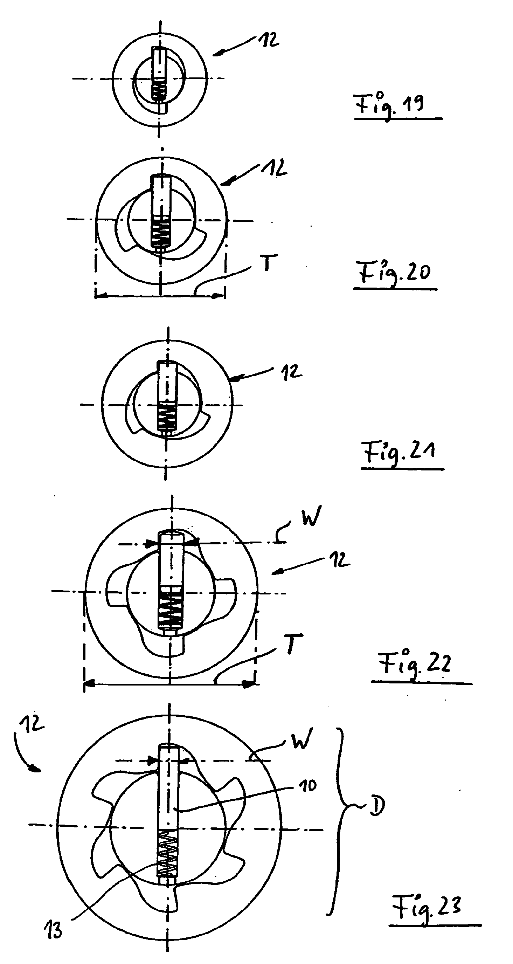

Weitere Variationsmöglichkeiten, wobei insbesondere die Durchmesser W der innen liegenden Mitnahmebolzen 10 variieren, ist aus den Prinzipdarstellungen gemäß Fig. 19 bis 23 ersichtlich. Es versteht sich, dass die in den vorbeschriebenen Prinzipdarstellungen gezeigten Größenanpassungen des Systems auch auf die in den vorbeschriebenen Ausführungen gemäß Fig. 7 und Fig. 25 gezeigten Einzelteile der Drehsperre D' entsprechend anwendbar sind.

In der Darstellung gemäß Fig. 24 ist zusätzlich zu der mit jeweiligen Pfeilen Z dargestellten Reibbelastung beim "Überfahren" des Mitnahmebolzens 10 ein Kraftdreieck dargestellt, mit denen die entsprechenden Reaktionskräfte unter Wirkung der Druckfeder 13 beispielhaft veranschaulicht werden. Deutlich wird dabei, dass ausgehend von einer Normalkraft N und der Wirkkraft C die resultierende Reibkomponente R" am Mitnahmebolzen 10 wirksam ist und dieser seitlich an der Wandung der Bohrung 20 angedrückt entsprechenden Reibbelastungen ausgesetzt wird. Entsprechend der Größe des jeweiligen Aufnahmeraumes 15' werden diese Reib-Belastungen in Folge der sich entspannenden Druckfeder 13 - bei Verlagerung nach links (Fig. 24) - durch Entlastung geringer.

Für den Fall, dass in Folge der wirksamen "Sprung-Funktion" (Fig. 6) in damit umgekehrter Wirkrichtung eine zunehmende Druckwirkung (Normalkraft N) am Mitnahmebolzen 10 auftritt, ist das System der entsprechenden Bauteile zu optimieren. Es wurde festgestellt, dass die entsprechende Wirkkraft C bei einer eine zu steile Federkennlinie aufweisenden Druckfeder 13 oder einem eine ungünstige Radienkontur aufweisenden Anlagebogen 14 dazu führen kann, dass sich im Bereich der Bohrung 20 der Schmierfilm verringert und ein "Fressen" im Bereich der Gleitverbindung die Teile beschädigt. Diese Problem ist dadurch beseitigt worden, dass die Kontur des Anlagebogens 14 in dem Bereich, in dem die Federkraft am höchsten ist, einen entsprechend flachen Kurvenverlauf (Zone L, Fig. 24) aufweist. Diese variablen Konturen im Bereich der Anlagebögen 14 werden in den in Fig. 14 bis 18 bzw. Fig. 19 bis 23 gezeigten Einbausituationen gezeigt, wobei hier anwenderspezifische Optimierungen so vorgesehen sind, dass insgesamt ein kompaktes und verschleißstabiles System der erfindungsgemäßen Drehsperre D, D' erreicht ist.

## Patentansprüche

1. Maschine zur Garten- und Landschaftspflege, insbesondere in Form einer Kehrmaschine, eines Rasenmähers, eines Schneeräumers o. dgl. Aggregate (2), mit einem zumindest zwei Antriebsräder (3, 4) an einer Querachse (6) aufnehmenden und einen Antriebsmotor (M) aufweisenden Fahrgestell (5), wobei die Maschine (1) sowohl in Geradeausfahrt (F) als auch beim Durchlaufen einer Wendebahn o. dgl. Änderungen der Fahrtrichtung (F', F") mittels einer Lenkeinheit (9) führbar ist und die Antriebsräder (3, 4) jeweils zum diese aufnehmenden Bereich der Querachse (6) hin eine bei Änderungen der Fahrtrichtung (F', F") zumindest phasenweise als Drehsperre (D, D') wirksame Stützverbindung aufweisen, wobei die zumindest eine Drehsperre (D, D') mit einem im Bereich der Stützverbindung durch ein Stellelement (11, 11') in radialer Richtung (R, R') zur Querachse (6) verlagerbaren und in eine Anlagestellung (G, G', G") überführbaren Mitnehmer (10, 10') versehen ist und dieser sowohl an einem Mitnahmeprofilteil (12, 12') der Drehsperre (D, D') anlegbar als auch entgegen der radialen Wirkung des Stellelementes (11, 11') zumindest teilweise aus dieser Anlagestellung (G, G', G") verschiebbar ist, **dadurch gekennzeichnet, dass** das Mitnahmeprofilteil (12, 12') zur Führung des Mitnahmebolzens (10, 10') kreisbogen-, spiralbogen- oder evolventenbogenförmig verlaufende Anlagebögen (14, 14'), jeweilige von diesen definierte Aufnahmetaschen (15) und jeweilige an deren Ende vorgesehene radiale Anlagekanten (16, 16') aufweist, derart, dass mit optimierbaren Profilierungen (K, 14) im Bereich des Mitnahmebolzens (10) und des Mitnahmeprofilteils (12) häufige Lastwechsel weitgehend verschleißfrei ausführbar sind.

2. Maschine nach Anspruch 1, **dadurch gekennzeichnet, dass** als Stellelement (11, 11') eine den Mitnehmer in Form eines Mitnahmebolzens (10, 10') hintergreifende Druckfeder (13, 13') vorgesehen ist.

3. Maschine nach Anspruch 1 oder 2, **dadurch gekennzeichnet, dass** der Mitnahmebolzen (10, 10') mittels der Druckfeder (13, 13') permanent am Mitnahmeprofilteil (12, 12') anlegbar ist.

4. Maschine nach einem der Ansprüche 1 bis 3, **dadurch gekennzeichnet, dass** das Mitnahmeprofilteil (12, 12') zumindest einen - vorzugsweise zwei - in einer jeweiligen Anlagekante (16) auslaufenden Anlagebogen (14, 14') aufweist.

5. Maschine nach einem der Ansprüche 1 bis 4, **dadurch gekennzeichnet, dass** das Mitnahmeprofil (12, 12') drei um 120° versetzt angeordnete Anlagekanten (16) aufweist.

6. Maschine nach einem der Ansprüche 1 bis 5, **dadurch gekennzeichnet, dass** die Mitnahmebolzen (10, 10') entlang des Mitnahmeprofils (12, 12') zwischen Anlagekante (16) und Aufnahmetasche (15, 15') an kreisbogenförmigen Teilabschnitten (17) anlegbar sind.

7. Maschine nach einem der Ansprüche 1 bis 6, **dadurch gekennzeichnet, dass** zumindest im Bereich des kreisbogenförmigen Teilabschnitts (17) ein verengter Schmierspalt (S) definiert ist.

8. Maschine nach einem der Ansprüche 1 bis 7, **dadurch gekennzeichnet, dass** das Mitnahmeprofilteil (12) der Drehsperre (D) mit der Radnabe (18) des jeweiligen Antriebsrades (3, 4) verbunden ist und der mit dem Mitnahmeprofilteil (12) zusammenwirkende Mitnahmebolzen (10) in einer in der Querachse (6) vorgesehenen Aufnahmeöffnung (19) gleitbeweglich gehalten sowie mittels der innen liegenden Druckfeder (13) radial verlagerbar (Pfeil R) ist, wobei als die Aufnahmeöffnung (19) eine die Querachse (6) durchgreifende Bohrung (20) mit bodenseitiger Auslassöffnung (21) vorgesehen ist.

9. Maschine nach Anspruch 8, **dadurch gekennzeichnet, dass** die Kontur des Anlagebogens (14) in dem Bereich, in dem die Federkraft (N) am Mitnahmebolzen (10) am höchsten ist, einen entsprechend flachen Kurvenverlauf (Zone L) aufweist.

10. Maschine nach einem der Ansprüche 1 bis 7, **dadurch gekennzeichnet, dass** der Mitnahmebolzen (10') der Drehsperre (D') einen im Querschnitt ringförmigen Nabenteil (18') des Antriebsrades (3, 4) im Bereich einer Durchgangsbohrung (22) durchgreift und im Bereich der angetriebenen Querachse (6') das Mitnahmeprofilteil (12') vorgesehen ist.

11. Maschine nach Anspruch 10, **dadurch gekennzeichnet, dass** der das Nabenteil (18') durchgreifende Mitnahmebolzen (10') rückseitig mit einer Druckfeder (13') versehen ist und andererseits an das innerhalb des Nabenteils (18') drehbare Mitnahmeprofilteil (12') anlegbar ist.

12. Maschine nach Anspruch 10 oder 11, **dadurch gekennzeichnet, dass** die Druckfeder (13') in einem über das Nabenteil (18') vorstehenden Hülsenteil (23, 23') geführt ist und dieses mit einer die Stellfeder (13') hintergreifenden Stellschraube o. dgl. Gegenhalter (24, 24') zusammenwirkt.

13. Maschine nach einem der Ansprüche 10 bis 12, **dadurch gekennzeichnet, dass** das Nabenteil (18') im Querschnitt ringförmig ausgebildet ist.

14. Maschine nach einem der Ansprüche 1 bis 13, **dadurch gekennzeichnet, dass** die Drehsperre (D, D') als eine in Richtung der Querachse (6, 6') mit seitlichen Abdeckteilen (26, 26') weitgehend fluiddicht verschlossene Baugruppe ausgebildet ist.

15. Maschine nach Anspruch 14, **dadurch gekennzeichnet, dass** in der Baugruppe ein zumindest die reibbelasteten Bereiche der Drehsperre (D, D') erfassendes Schmiermittel vorgesehen ist.

16. Maschine nach Anspruch 14 oder 15, **dadurch gekennzeichnet, dass** die Baugruppe im Bereich der seitlichen Abdeckteile (26, 26') jeweilige Dichtungen und/oder zumindest einen Schmiermitteleinlass (25, 29) aufweist.

## Claims

1. Gardening and landscaping machine, particularly in the form of a sweeping machine, lawn mower, snow clearer or the like units (2), having a chassis (5) which holds at least two drive wheels (3, 4) on a transverse axle (6) and which has a drive motor (M), the machine (1) being guidable by means of a steering unit (9) both when travelling in a straight line (F) and when making a turn or the like changes in its direction of travel (F', F"), and the drive wheels (3, 4) each having, towards that region of the transverse axle (6) which receives them, a supporting joint which, when there are changes in the direction of travel (F', F"), acts as a mechanism for locking in rotation (D, D') at least in a phase or phases, the at least one mechanism for locking in rotation (D, D') being provided with an entraining member (10, 10') which, in the region of the supporting joint, can be displaced in the radial direction (R, R') relative to the transverse axle (6) by an actuating member (11, 11') and which can be transferred to a contacting position (G, G', G"), and the said entraining member (10, 10') both being able to be applied to a part (12, 12') of the mechanism for locking in rotation (D, D') which has an entrainment profile and being able to be at least partly displaced from the said contacting position (G, G', G") in opposition to the radial action of the actuating member (11, 11'), **characterised in that**, to guide the entraining pin (10, 10'), the part (12, 12') having the entrainment profile has curves for contact (14, 14') which extend in the form of arcs, spirals or involute curves, receiving pockets (15) respectively defined by the curves for contact (14, 14'), and radial edges for abutment (16, 16') provided at the ends of the respective receiving pockets (15), in such a way that, with optimisable profilings (K, 14) in the region of the entraining pin (10) and the part (12, 12') having the entrainment profile, frequent changes of load can be performed largely without wear.

2. Machine according to claim 1, **characterised in that** what is provided as an actuating member (11, 11') is a compression spring (13, 13') which fits behind the entraining member, which latter is in the form of an entraining pin (10, 10').

3. Machine according to claim 1 or 2, **characterised in that** the entraining pin (10, 10') can be constantly applied to the part (12, 12') having the entrainment profile by means of the compression spring (13, 13').

4. Machine according to one of claims 1 to 3, **characterised in that** the part (12, 12') having the entrainment profile has at least one, and preferably two, curves for contact (14, 14') which terminate in respective edges for abutment (16).

5. Machine according to one of claims 1 to 4, **characterised in that** the part (12, 12') having the entrainment profile has three edges for abutment (16) arranged with a 120° offset from one another.

6. Machine according to one of claims 1 to 5, **characterised in that**, along the entrainment profile (12, 12'), the entraining pins (10, 10') can be applied to arcuate portions (17) between the edges for abutment (16) and the receiving pockets (15, 15').

7. Machine according to one of claims 1 to 6, **characterised in that** a narrowed lubrication gap (S) is defined at least in the region of the arcuate portion (17).

8. Machine according to one of claims 1 to 7, **characterised in that that** part (12) of the mechanism for locking in rotation (D) which has the entrainment profile is connected to the hub (18) of the given drive wheel (3, 4) and the entraining pin (10) which co-operates with the part (12) having the entrainment profile is held to be movable by sliding in a receiving opening (19) provided in the transverse axle (6) and is able to be displaced radially (arrow R) by means of the internal compression spring (13), a bore (20) passing through the transverse axle (6) and having an outlet opening (21) at the bottom end being provided as the receiving opening (19).

9. Machine according to claim 8, **characterised in that**, in the region in which the spring-applied force (N) on the entraining pin (10) is highest, the outline of the curve for contact (14) is a curve of a suitably shallow gradient (zone L).

10. Machine according to one of claims 1 to 7, **characterised in that** the entraining pin (10') of the mechanism for locking in rotation (D) passes through a hub part (18') of annular cross-section of the drive wheel (3, 4) in the region of a through-bore (22), and the part (12') having the entrainment profile is provided in the region of the driven transverse axle (6')

11. Machine according to claim 10, **characterised in that** the entraining pin (10') which passes through the hub part (18') is provided at the rear end with a compression spring (13') and at the other end can be applied to the part (12') having the entrainment profile, which is rotatable in the hub part (18').

12. Machine according to claim 10 or 11, **characterised in that** the compression spring (13') is guided in a sleeve part (23, 23') which projects from the hub part (18') and the said sleeve part (23, 23') co-operates with a setting screw or the like retainer (24, 24') which fits behind the compression spring (13').

13. Machine according to one of claims 10 to 12, **characterised in that** the hub part (18') is of an annular form in cross-section.

14. Machine according to one of claims 1 to 13, **characterised in that** the mechanism for locking in rotation (D, D') takes the form of an assembly which is sealed off by lateral covering parts (26, 26') to be largely fluid-tight in the direction of the transverse axle (6, 6').

15. Machine according to claim 14, **characterised in that** there is provided in the assembly a lubricant which at least covers those regions of the mechanism for locking in rotation (D, D') which are subject to frictional loads

16. Machine according to claim 14 or 15, **characterised in that** the assembly has respective seals in the region of the lateral covering parts (26, 26') and/or at least one lubricant inlet (25, 29).

## Revendications

1. Machine d'entretien de jardins et de paysages, en particulier sous la forme d'une balayeuse, d'une tondeuse à gazon, d'un chasse-neige ou groupes similaires (2), avec un châssis (5) présentant un moteur d'entraînement (M) et recevant au moins deux roues d'entraînement (3, 4) sur un axe transversal (6), sachant que la machine (1) peut être guidée non seulement en ligne droite (F) mais aussi lors du passage d'une voie tournante ou modifications similaires du sens de la marche (F', F") à l'aide d'une unité de direction (9) et les roues d'entraînement (3, 4) présentent respectivement vers la zone recevant celles-ci de l'axe transversal (6) une liaison d'appui agissant en cas de modifications du sens de la marche (F', F") au moins par phase comme verrou rotatif (D, D'), sachant qu'au moins un verrou rotatif (D, D') est pourvu d'un entraîneur (10, 10') déplaçable dans la zone de la liaison d'appui par un élément de réglage (11, 11') dans le sens radial (R, R') par rapport à l'axe transversal (6) et pouvant être transporté dans une position d'appui (G, G', G") et celui-ci peut être posé non seulement contre une partie profilée d'entraînement (12, 12') du verrou rotatif (D, D') mais aussi déplacé à l'encontre de l'action radiale de l'élément de réglage (11, 11') au moins en partie de cette position d'appui (G, G', G"), **caractérisée en ce que** la partie profilée d'entraînement (12, 12') présente pour le guidage du boulon d'entraînement (10, 10') des arcs d'appui (14, 14') s'étendant en arc de cercle, en spirale ou en développante, des poches de réception (15) respectives définies par ceux-ci et des arêtes d'appui (16, 16') radiales respectives prévues sur leur extrémité de telle manière que des changements de charge fréquents avec des profilages (K, 14) pouvant être optimisés dans la zone du boulon d'entraînement (10) et de la partie profilée d'entraînement (12) puissent être réalisés en grande partie sans usure.

2. Machine selon la revendication 1, **caractérisée en ce qu'**un ressort de pression (13, 13') venant en prise derrière l'entraîneur sous la forme d'un boulon d'entraînement (10, 10') est prévu comme élément de réglage (11, 11').

3. Machine selon la revendication 1 ou 2, **caractérisée en ce que** le boulon d'entraînement (10, 10') peut être posé en permanence à l'aide du ressort de pression (13, 13') sur la partie profilée d'entraînement (12, 12').

4. Machine selon l'une quelconque des revendications 1 à 3, **caractérisée en ce que** la partie profilée d'entraînement (12, 12') présente au moins un arc d'appui (14, 14'), de préférence deux, se terminant dans une arête d'appui (16) respective.

5. Machine selon l'une quelconque des revendications 1 à 4, **caractérisée en ce que** le profilé d'entraînement (12, 12') présente trois arêtes d'appui (16) disposées en déport de 120°.

6. Machine selon l'une quelconque des revendications 1 à 5, **caractérisée en ce que** les boulons d'entraînement (10, 10') peuvent être posés le long du profilé d'entraînement (12, 12') entre l'arête d'appui (16) et la poche de réception (15, 15') sur des sections partielles en forme d'arc de cercle (17).

7. Machine selon l'une quelconque des revendications 1 à 6, **caractérisée en ce qu'**une fente de graissage (S) rétrécie est définie au moins dans la zone de la section partielle (17) en forme d'arc de cercle.

8. Machine selon l'une quelconque des revendications 1 à 7, **caractérisée en ce que** la partie profilée d'entraînement (12) du verrou rotatif (D) est reliée au moyeu (18) de la roue d'entraînement (3, 4) respective et le boulon d'entraînement (10) coopérant avec la partie profilée d'entraînement (12) est maintenu de manière mobile en glissement dans une ouverture de réception (19) prévue dans l'axe transversal (6) ainsi qu'est déplaçable radialement (flèche R) à l'aide du ressort de pression intérieur (13), sachant qu'un perçage (20) traversant l'axe transversal (6) est prévu avec une ouverture de sortie (21) côté fond comme ouverture de réception (19).

9. Machine selon la revendication 8, **caractérisée en ce que** le contour de l'arc d'appui (14) présente une allure de courbe (zone L) plate en conséquence, dans la zone, dans laquelle la force de ressort (N) sur le boulon d'entraînement (10) est la plus élevée.

10. Machine selon l'une quelconque des revendications 1 à 7, **caractérisée en ce que** le boulon d'entraînement (10') du verrou rotatif (D') traverse une partie de moyeu (18') annulaire en section transversale de la roue d'entraînement (3, 4) dans la zone d'un perçage débouchant (22) et la partie profilée d'entraînement (12') est prévue dans la zone de l'axe transversal (6') entraîné.

11. Machine selon la revendication 10, **caractérisée en ce que** le boulon d'entraînement (10') traversant la partie de moyeu (18') est pourvu côté arrière d'un ressort de pression (13') et peut être posé d'autre part contre la partie profilée d'entraînement (12') rotative dans la partie de moyeu (18').

12. Machine selon la revendication 10 ou 11, **caractérisée en ce que** le ressort de pression (13') est guidé dans une partie de douille (23, 23') dépassant de la partie de moyeu (18') et celle-ci coopère avec une vis de réglage ou contre-support similaire (24, 24') venant en prise derrière le ressort de réglage (13').

13. Machine selon l'une quelconque des revendications 10 à 12, **caractérisée en ce que** la section transversale de la partie de moyeu (18') est réalisée en forme d'anneau.

14. Machine selon l'une quelconque des revendications 1 à 13, **caractérisée en ce que** le verrou rotatif (D, D') est réalisé comme un bloc fermé en grande partie de manière étanche au fluide en direction de l'axe transversal (6, 6') avec des parties de recouvrement latérales (26, 26').

15. Machine selon la revendication 14, **caractérisée en ce qu'**un lubrifiant couvrant au moins les zones sollicitées par la friction du verrou rotatif (D, D') est prévu dans le bloc.

16. Machine selon la revendication 14 ou 15, **caractérisée en ce que** le bloc présente dans la zone des parties de recouvrement (26, 26') latérales des garnitures respectives et/ou au moins une entrée de lubrifiant (25, 29).
